# EUROPÄISCHE PATENTANMELDUNG

(11) **EP 4 749 259 A1**
(43) Veröffentlichungstag der Anmeldung: **27.05.2026**
(21) Anmeldenummer: 25216241.7
(22) Anmeldetag: 17.11.2025
(51) Int. Cl.: G01M 7/02, G01M 7/06

(54) **TESTVORRICHTUNG UND VERFAHREN ZUM TESTEN VON BAUTEILEN**

(30) Priorität: 20.11.2024 DE 102024134023
(71) Anmelder: Deutsches Zentrum für Luft- und Raumfahrt e.V., 53227 Bonn-Oberkassel (DE)
(72) Erfinder: Bestard Körner, Matias, 28209 Bremen (DE)
(74) Vertreter: Gerstein, Hans Joachim

(57) **Zusammenfassung**

Eine Testvorrichtung (1) zum Testen von Vibrationseinwirkungen auf bewegte Bauteile (5) wird beschrieben, wobei die Testvorrichtung (1) eine Linearantriebseinheit mit einer sich in eine Längsbewegungsrichtung (LB) erstreckenden Schiene (2) und einem linear beweglich auf der Schiene (2) gelagerten Schlitten (3) und eine zur Ansteuerung der Testvorrichtung (1) ausgebildete Steuerungseinheit (9) hat.

Die Linearantriebseinheit hat einen elektromagnetischen oder elektrodynamischen Antriebsaktuator und ist zur Bewegung des Schlittens (3) auf der Schiene (2) ausgebildet ist, wobei der Linearantrieb zur überlagerten niederfrequenten und hochfrequenten Beschleunigung und Entschleunigung des Schlittens eingerichtet ist.

## Beschreibung

Die Erfindung betrifft eine Testvorrichtung zum Testen von Vibrationseinwirkungen auf bewegte Bauteile, wobei die Testvorrichtung eine Linearantriebseinheit mit einer sich in eine Längsbewegungsrichtung erstreckenden Schiene und einem linear beweglich auf der Schiene gelagerten Schlitten und eine zur Ansteuerung der Testvorrichtung ausgebildete Steuerungseinheit hat.

Bauteile von Satelliten sind vielfältigen Belastungen ausgesetzt. Als so genannte Mikrovibrationen werden die schwachen Vibrationen bezeichnet, die beim Betrieb von beweglichen oder vibrierenden Teilen in der Umlaufbahn auftreten. Im Allgemeinen können selbst relativ kleine Schwingungskräfte, die auf die Plattform des Raumfahrzeugs einwirken, Mikrovibrationen erzeugen, wenn an Bord befindliche bewegliche Geräte betrieben werden. Der wichtigste Aspekt, der bei der Bewertung von Mikrovibrationsumgebungen und deren Schweregrad zu berücksichtigen ist, ist die Übertragung der relevanten internen Störungen des Raumfahrzeugs auf die empfindlichen Empfängerstellen, d. h. wie sich die Störungen durch die Struktur ausbreiten. Zur Simulation der Mikrovibrationen und zur Untersuchung von Bauteilen, die unter dem Einfluss von Mikrovibrationen stehen, finden Vibrationsshaker aus dem Gebiet der Materialprüfung Anwendung.

US 4 715 229 A offenbart einen elektromagnetisch angeregten Vibrationsprüfstand (Shaker) der eine eindimensionale Bewegung in vertikaler Richtung ermöglicht.

EP 1 598 653 B1 offenbart einen Vibrationsprüfstand für Satelliten dessen ringförmiger Aufnahmebereich eine eindimensionale Bewegung in vertikaler Richtung ermöglicht.

JP 2021 135 249 A offenbart eine Vibrationstestvorrichtung mit einem Vibrationstisch, der zeitgleich entlang drei unterschiedlicher Raumrichtungen vibriert.

CN 115452292 A offenbart eine Simulationsplattform für Bauteile der Raumfahrt zur Simulation von Mikrovibrationen mit sechs Freiheitsgraden in der Bauform eines Hexapoden.

JP 2014 052 337 A offenbart eine Vibrationstestvorrichtung, bei der zum Erzeugen einer hohen Beschleunigung und eines großen Bewegungsbereichs auf einem ersten Vibrationstisch, der von einem ersten Aktuator angeregt wird, ein zweiter Aktuator montiert ist. Das zu prüfende Bauteil ist auf einem zweiten Vibrationstisch montiert und wird sowohl von dem zweiten Aktuator, als auch über den zweiten Aktuator von dem ersten Aktuator angeregt.

Aufgabe der vorliegenden Erfindung ist es, eine verbesserte Testvorrichtung und ein verbessertes Verfahren zum Testen von Bauteilen zu schaffen.

Die Aufgabe wird mit der Testvorrichtung mit den Merkmalen des Anspruchs 1 sowie mit dem Verfahren zum Testen von Bauteilen mit den Merkmalen des Anspruchs 13 gelöst. Vorteilhafte Ausführungsformen sind in den Unteransprüchen beschrieben.

Es wird für eine gattungsgemäße Testvorrichtung vorgeschlagen, dass die Linearantriebseinheit einen elektromagnetischen oder elektrodynamischen Antriebsaktuator hat und zur Bewegung des Schlittens auf der Schiene ausgebildet ist, wobei der Linearantrieb zur überlagerten niederfrequenten und hochfrequenten Beschleunigung und Entschleunigung des Schlittens eingerichtet ist.

Der Schlitten wird vorzugsweise berührungslos auf der Schiene verlagert, so dass der Einfluss von Störeinflüssen aufgrund von Reibung und Ungleichmäßigkeiten der Führung reduziert werden. Die Linearantriebseinheit und/oder die Bewegungseinheit können einen elektrodynamischen und/oder elektromagnetischen Antriebsaktuator haben. Dieser Antrieb entspricht dem eines Elektromotors in linearer Richtung, wobei das erforderliche Magnetfeld mittels eines Elektromagneten oder mittels eines Permanentmagneten erzeugt werden kann.

Es kann eine Bewegungseinheit an dem Schlitten angeordnet sein. Die Bewegungseinheit hat einen Bauteilträger zum Tragen des zu bewegenden Bauteils und dient dazu, den Bauteilträger in eine Richtung quer zur Längsbewegungsrichtung des Schlittens auf der Schiene zu bewegen.

Die Kombination aus der Bewegungseinheit und der Linearantriebseinheit ermöglicht es, den Bauteilträger insgesamt einerseits in einem großen Längenbereich mit einer hohen Längenauflösung zu bewegen. Das bedeutet, dass der Bauteilträger zum Beispiel um eine Länge von beispielsweise insgesamt 5 bis 10 m mit überlagerten niederfrequenten und hochfrequenten Hin- und Herbewegungen, d.h. mit Be- und Entschleunigungen, bewegt werden kann. Gleichzeitig ist es jedoch auch möglich, dass der Bauteilträger um Bewegungsinkremente von zum Beispiel 0,1 nm quer zur Bewegungsrichtung hin- und herzubewegen. Damit können Störungen kompensiert werden.

Die Längenauflösung, also die Schrittweite von Bewegungsschritten, die inkrementell von der Steuerungseinheit der Testvorrichtung geregelt werden kann, bezogen auf den gesamte Längenbereich der Testeinrichtung kann in diesem Fall also 1/10¹¹ betragen.

Es können voneinander unabhängig bewegbare Achsen vorgesehen sein. Dadurch ist es möglich, für jede Achse eine unterschiedliche Mess- und/oder Bewegungseinrichtung zu verwenden.

Abhängig von den Größenordnungen in denen eine Länge gemessen um eine Länge bewegt werden soll, existieren unterschiedliche Mess- bzw. Bewegungseinrichtungen. Bei der Wahl einer Mess- bzw. Bewegungseinrichtung sind Faktoren wie Wirtschaftlichkeit, Wiederholgenauigkeit und nicht zuletzt die technische Realisierbarkeit, die sich unter Umständen gegenseitig beeinflussen, zu berücksichtigen. Zum Beispiel kann ein Messverfahren, das eine besonders hohe Längenauflösung bietet, ist auf seinem maximal möglichen Längenbereich beschränkt sein.

Für die Messeinrichtungen können alle bekannten Messverfahren zu Längenmessung zum Einsatz kommen. Diese umfassen optische Längenmessverfahren, wie zum Beispiel Laserinterferometer oder elektromagnetische Längenmessverfahren, zum Beispiel mittels eines induktiven Messkopfs. Weiterhin sind auch mechanische Längenmessverfahren, wie eine Zahnstange mit einem Zahnrad oder eine Gewindespindel mit einem Drehgeber, oder Kombinationen aus den genannten Messverfahren denkbar.

Für die Bewegungseinrichtungen können alle bekannten Aktuatoren für lineare oder Schwenk- bzw. Drehbewegungen zum Einsatz kommen.

Für eine Ausführungsform der Erfindung wird die Bewegung des Schlittens über eine induktive Längenmesseinrichtung gemessen. Ein Band mit magnetisch erkennbaren Längenbezeichnungen ist dazu stationär an der Testvorrichtung befestigt, während ein Induktiver Messkopf zusammen mit dem Schlitten verfahren wird und die Längenbezeichnungen erkennt. Die Querbewegungsrichtung kann mittels eines Laserinterferometers gemessen werden.

Die Messeinheit kann mit der Steuerungseinheit verbunden sein. Die Steuerungseinheit kann zur Regelung der Bewegung des Bauteilträgers in Längsbewegungsrichtung mittels der Bewegung des Schlittens und in Querbewegungsrichtung eingerichtet sein.

Die Messeinheit kann zur Erfassung der Lage, Position, Geschwindigkeit und/oder Beschleunigung des Bauteilträgers ausgebildete Messensoren haben.

Die Schiene der Linearantriebseinheit kann ein Führungsprofil haben, das zum Halten des Schlittens in den von der Längsbewegungsrichtung des Schlittens abweichenden Richtungen an der Schiene und zum Führen des Schlittens in Längsbewegungsrichtung des Schlittens ausgebildet ist. Als Führungsprofil eignen sich sämtliche formschlüssige Paarungen von Ausnehmungen und dazu passenden Gegenstücken, wobei sich jeweils das Profil mit der Ausnehmung an der Schiene befindet und das Gegenstück an dem Schlitten oder umgekehrt. Bei dem Führungsprofil kann es sich insbesondere um ein Profil mit einer Hinterschneidung handeln, wie ein Schwalbenschwanzprofil. Das Führungsprofil kann aber auch eine Führungsnut mit einem beliebig geformten Führungskörper, der mit ausreichendem Spalt in der Führungsnut verschiebbar ist, sein.

Alternativ oder kumulativ kann die Lagerung des Schlittens durch ein Gleitlager erfolgen, welches mit Öl oder Luft geschmiert sein kann. Die Gleitlager kann dabei ein hydrostatisches oder ein hydrodynamisches Gleitlager sein.

Der Bauteilträger kann eine Energieversorgung zur Versorgung des an dem Bauteilträger getragenen Bauteils und eine Kommunikationsschnittstelle zur Übertragung von Daten haben. Diese Energieversorgung kann als eine von außen zum Bauteilträger geführte, mitbewegte Versorgungsleitung sein. Denkbar ist aber auch, dass eine autarke Energieversorgungseinheit mit dem Bauteilträger verbunden ist. Die Energieversorgung kann zur Versorgung mit elektrischer Energie, thermischer Energie, hydraulischer Energie und/oder pneumatischer Energie eingerichtet sein.

Der Schlitten kann in Längsbewegungsrichtung im Bereich von 10⁻⁶ m bis 10 m bewegbar sein und der Bauteilträger relativ zum Schlitten in Querrichtung zur Längsbewegungsrichtung im Bereich von 10⁻¹⁰ m bis 10⁻⁶ m bewegbar sein. Die Aufteilung der Bewegungsbereiche ist insbesondere von den Mess- und Bewegungseinrichtungen abhängig.

Die Länge der Schiene kann um das 10⁷-fache größer als die Schrittweite der inkremental regelbaren hochfrequenten Bewegungsschritte in Längsbewegungsrichtung sein. Die Länge kann um das 10¹¹-fache größer als die Schrittweite der inkremental regelbaren hochfrequenten Bewegungsschritte in Querbewegungsrichtung sein. Damit ist die Länge der Schiene wesentlich größer, als die inkrementalen Hin- und HerBewegungsinkremente, die durch die hochfrequente Ansteuerung des Schlittens verursacht werden.

Der Schlitten kann in Längsbewegungsrichtung durch die überlagerte hochfrequente Beschleunigung mit Hin- und Her-Bewegungsschritten von bis zu 10⁻⁶ m und die niederfrequente Bewegung mit Hin- und Her-Bewegungsschritten von mindestens 10⁻³ m ansteuerbar sein. Die niederfrequente Beschleunigung und Entschleunigung kann im Frequenzbereich von 0,1 Hz bis 100 Hz und die hochfrequente Beschleunigung im Frequenzbereich von 200 Hz bis 1 MHz (vorzugsweise im Bereich von einigen 100 Hz bis einigen kHz) liegen.

Der Bauteilträger kann relativ zum Schlitten in Querrichtung zur Längsbewegungsrichtung durch hochfrequente Beschleunigung mit Hin- und Her-Bewegungsschritten im Bereich von 10⁻¹⁰ m bis 10⁻⁶ m bewegbar sein.

Das Verfahren zum Testen von Bauteilen mit einer oben beschriebenen Testvorrichtung umfasst ein berührungsloses Bewegen des Schlittens auf der Schiene mit dem elektromagnetischen oder elektrodynamischen Antriebsaktuator in eine Längsbewegungsrichtung entlang der Längserstreckungsrichtung der Schiene mit der Linearantriebseinheit mit einer überlagerten niederfrequenten und hochfrequenten Beschleunigung und Entschleunigung des Schlittens.

Die hochfrequente Bewegung kann eine Hin- und Herbewegung mit Bewegungsschritten von bis zu 10⁻⁶ m und die niederfrequente Bewegung eine Hin- und Herbewegung mit Bewegungsschritten von bis zu 10⁻³ m sein.

Damit werden hochfrequente kurze Bewegungsinkremente, d.h. schnelle, kurze Be- und Entschleunigungen, und niederfrequente längere Bewegungsinkremente auf den Schlitten aufgeprägt und der Schlitten über die Zeit mit den überlagerten Bewegungsinkrementen bei fortwährender Be- und Entschleunigung über eine relativ zu den hochfrequenten Bewegungsinkrementen mit einem Faktor von mindestens 10¹⁰ größere Länge des Schlittens bewegt. Damit lässt sich über einen großen Weg bzw. eine längere Zeit der Einfluss von Belastungen auf das zu testende Bauteil durch Mikrovibrationen während einer Bewegung bzw. Beschleunigungsbelastung überprüfen.

Der Schlitten kann auf der Schiene über eine Länge bewegt werden, die mindestens um das 10.000fache größer als die hochfrequenten Hin- und Herbewegungsinkremente des Schlittens ist.

Das Verfahren kann weiterhin die Schritte haben:
- Detektion von auf die Bewegung des Bauteilträgers wirkenden Störungen; und
- hochfrequentes Beschleunigen des Bauteilträgers relativ zum Schlitten in Querbewegungsrichtung quer zur Längsbewegungsrichtung des Schlittens mit der Bewegungseinheit so, dass die detektierten Störungen reduziert werden.

Gegebenenfalls kann zeitgleich zu den genannten Verfahrensschritten eine Versorgung des Bauteils insbesondere mit elektrischer Energie, thermischer Energie, hydraulischer Energie und/oder pneumatischer Energie erfolgen

Die Schritte können zeitgleich oder zeitversetzt zueinander durchgeführt werden. Das Bewegen des Bauteilträgers erfolgt vorzugsweise zeitgleich mit dem Bewegen des Schlittens, um auf diese Weise den Abstand des Bauteilträgers von der Lagerebene der Schiene für den Schlitten konstant zu regeln, insbesondere um externe Störungen wie z.B. durch Luftzug, Versorgungskabel etc. auszugleichen und die Testvorrichtung gegenüber der Umwelt zu isolieren.

Im Sinne der vorliegenden Erfindung wird der Begriff "ein" als unbestimmter Begriff und nicht als Zahlwort verstanden.

Die Erfindung wird nachfolgend anhand der beigefügten Zeichnung mit einem Ausführungsbeispiel beispielhaft beschrieben. Es zeigen:
- Fig. 1 -: Skizze der Vorderansicht einer Testvorrichtung;
- Fig. 2 -: Skizze der Seitenansicht der Testvorrichtung von der rechten Seite;
- Fig. 3 -: Skizze der Testvorrichtung in der Schnittansicht um die Z-Achse von der Seitenansicht aus Figur 2;
- Fig. 4 -: Skizze einer anderen Ausführungsform der Testvorrichtung;
- Fig. 5 -: Skizze einer weiteren Ausführungsform Testvorrichtung;
- Fig. 6 -: Funktionsskizze einer Testvorrichtung mit Kolbenaktuator.

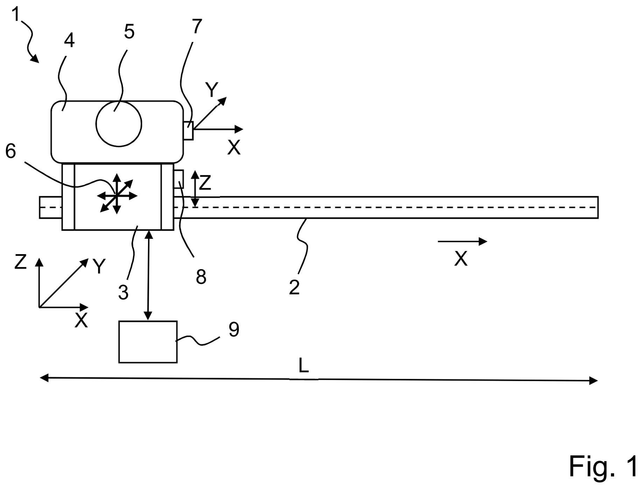

Figur 1 zeigt eine Skizze einer Testvorrichtung 1. In eine Längsbewegungsrichtung X erstreckt sich eine Schiene 2 über die Länge L. An der Schiene 2 befindet sich ein Schlitten 3. Der Schlitten 3 ist entlang der Längsbewegungsrichtung X bewegbar. Auf dem Schlitten 3 befindet sich eine Bewegungseinheit. Mittels der Bewegungseinheit ist der an auf der Bewegungseinheit angeordneter Bauteilträger 4 in eine Querbewegungsrichtung Y, Z, die sich quer zu der Längsbewegungsrichtung X erstreckt, bewegbar. An dem Bauteilträger 4 ist ein Bauteil 5 befestigt, welches getestet werden soll.

Die Bewegung des Bauteilträgers 4 in die Längsbewegungsrichtung X und in die Querbewegungsrichtung Y, Z wird von einer Steuerungseinheit 9 geregelt.

Die Bewegung in Längsbewegungsrichtung erfolgt mit einem elektromagnetischen oder elektrodynamischen Antriebsaktuator. Dabei wird eine hochfrequente Beschleunigung und Entschleunigung, d.h. eine Hin- und Herbewegung in kleinen Bewegungsschritten zur Aufprägung der zu simulierenden Mikrovibrationen genutzt. Dieser hochfrequenten Bewegung wird eine niederfrequente Be- und Entschleunigung zur Simulation einer Bewegungsbelastung quasi in Schwerelosigkeit überlagert.

Die Bewegung des Bauteilträgers 4 in mindestens eine Richtung quer zur Längsbewegungsrichtung X kann zur Reduzierung von Störeinflüssen, d.h. zur Störungskompensation, genutzt werden. Mit dieser zusätzlichen Bewegung des Bauteilträgers 4 kann auch eine Aufprägung von Mikrobewegungen erfolgen.

Die Länge L der Schiene 2 ist um den Faktor von mindestens 10¹⁰ größer, als die Bewegungsinkremente bei einer Hin- und Herbewegung des Schlittens 3 durch ein Intervall einer hochfrequenten Be- und Entschleunigung.

Die Testvorrichtung 1 ("Micro Vibration Motion Simulator (MVMS)" ist ein Hardwaregerät, das Vibrationsbewegungen simulieren kann, um die Leistung verschiedener Sensoren, Aktoren und Kontrollsysteme unter Mikrovibrationsbedingungen zu testen.

Das MVMS verfügt über mehrere Freiheitsgrade (DOF), d. h. es kann komplexe Schwingungsmuster wie Sinuswellen, Rechteckwellen, willkürliche Bewegungen, transiente Störungen oder Zufallsschwingungen erzeugen. Mit diesem Bewegungssimulator lassen sich realistische und kontrollierte Mikrovibrationen für verschiedene Anwendungen im Rahmen einer Verifikations- und Validierungskampagne (V&V) ermöglichen. Das Produkt zielt darauf ab, die Auswirkungen von Mikrovibrationen zu simulieren, die typischerweise bei Mikrogravitationsflügen oder an Bord von Raumtransportern, Raumfahrzeugen und Raumlandesystemen auftreten.

Das Konzept der Testvorrichtung 1 beruht auf der Erkenntnis, dass Mikrovibrationen verschiedene Systeme wie elektronische Geräte, mechanische Komponenten, Sensoren jeder Art (elektromechanisch, quantenbasiert usw.) und Nutzlasten (Mikrogravitation) an Bord von Raumfahrtsystemen erheblich beeinflussen können. Durch die Simulation dieser Schwingungen ermöglicht die Testvorrichtung 1 Produkte unter kontrollierten Bedingungen zu testen und zu validieren.

Das Konzept der Testvorrichtung 1 beruht auf folgenden Entwurfsfaktoren und Annahmen:
- Notwendigkeit einer präzisen Kontrolle der Schwingungsamplitude (±0,5 dB bis ±3 dB) und der Frequenz (±1%)
- Hohe Stimulationsfrequenzbandbreite: Die Anforderung, einen breiten Bereich von Stimulationsfrequenzen, von 0,01 Hz bis zu mehreren kHz, zur Verfügung zu stellen, um verschiedene Mikrovibrationsbedingungen auf einem einzigen Prüfstand zu simulieren. Dies beinhaltet die Möglichkeit, verschiedene Schwingungsmuster zu kombinieren, z. B. Sinuswelle, weißes Rauschen, transiente Impulse usw. Darüber hinaus sollte eine Überlappung von Frequenzbereichen ermöglicht werden, was die Simulation komplexer Schwingungsszenarien erlaubt.
- Hohe Bandbreite der Stimulationsbeschleunigung: Es muss ein breites Spektrum an Stimulationsbeschleunigungen von 0,001 g bis zu mehreren g zur Verfügung stehen, um verschiedene Vibrationsniveaus zu simulieren, von Mikrovibrationen bis hin zu schweren transienten Schockumgebungen (z. B. Einrast- und Verriegelungsmechanismen, Aufprall von Orbitaltrümmern usw.).
- Kompatibilität der Nutzlast: Die Notwendigkeit, eine breite Palette von Nutzlasten zu hosten. Dabei können Nutzlasten unterschiedlicher Größen untersucht werden, von kleinen Sensoren bis hin zu großen Maschinen. Zudem lassen sich unterschiedliche Betriebsarten realisieren, wie insb. ein unabhängiger Betrieb oder ein an ein Ground Support Equipment (GSE) wie Stromquellen oder Wärmesenken angebundener Betrieb.
- Lange Betriebszeitbandbreite mit minimalen Unterbrechungen: Die Notwendigkeit, längere Betriebszeiten ohne Unterbrechung zu gewährleisten, die von wenigen Sekunden bis zu mehreren Tagen reichen können.

### Funktionale Architektur

Die Testvorrichtung 1 (MVMS) ist als vielseitiges und modulares System konzipiert, das verschiedene Nutzlastkonfigurationen und Betriebsarten aufnehmen kann. Die funktionale Architektur ist auf die folgenden Schlüsselkomponenten ausgerichtet:
a) Sicherheits- und Schutzsystem:
   Gewährleistet die Sicherheit von Bediener und Nutzlast durch die Implementierung mehrerer Schutzschichten, einschließlich Notabschaltung, Kollisionserkennung und Personenschutzfunktionen, wie z. B.:
   - Verriegelungen zur Verhinderung von unbefugtem Zugriff oder Betrieb während kritischer Phasen der Prüfung.
   - Umweltdetektoren zur Überwachung von Temperatur, Druck, Feuchtigkeit usw.
   - Nutzlast-Watchdogs zur Überwachung der Nutzlastbedingungen während des Betriebs.
b) Kontrollsystem:
   Bietet Echtzeit-Datenverarbeitung und Kontrolle über den Prüfstand, einschließlich:
   - Hosting des Testmanagers für die Steuerung und Ausführung der Testszenarien
   - Überwachung und Kontrolle der Vibrationsumgebung, um eine präzise Kontrolle von Amplitude und Frequenz zu gewährleisten
   - Steuerung der Prüfstands-/Laborumgebung
   - Bereitstellung einer Mensch-Maschine-Schnittstelle (HMI) für den Bediener
c) Vibrationserzeugungssystem:
   Erzeugt und verstärkt die gewünschten Vibrationsmuster durch eine Kombination von Betätigungs- und fortschrittlichen Signalverarbeitungstechniken, einschließlich:
   - die Schiene, über die die Bewegung simuliert wird
   - Der Schlitten, der sich entlang dieser Schiene in allen drei Achsen (X, Y, Z) bewegt und dreht, umfasst auch:
d) Nutzlasthalterung (Payload Fixture, PF):
   Hält die Nutzlast PL während des Betriebs in Position. Die Nutzlasthalterung PF ist so konzipiert, dass sie verschiedene Nutzlastkonfigurationen und Schnittstellen aufnehmen kann. Dies beinhaltet:
   - eine Motion Control Unit, die den Low-Level-Zugriff zwischen dem Steuerungssystem und den Aktoren und Sensoren ermöglicht
   - Aktuatoren als Kernelement des Vibrationserzeugungssystems, das für die Erzeugung der Bewegung und Vibration in allen drei Achsen (X, Y, Z) verantwortlich ist. Die Aktuatoren können je nach Art des Aktuators entweder auf der Schiene, auf dem Schlitten oder auf beiden angeordnet sein.
   - Sensoren zur Messung der Schwingungsparameter wie Amplitude, Frequenz und Wellenform. Diese Messungen werden dann an das Steuerungssystem zur Echtzeitanpassung der Schwingungsmuster weitergeleitet. Zu den Sensoren können Beschleunigungsmesser, Tachometer und andere spezielle Sensoren gehören, je nach den Anforderungen. Die Sensoren können am Schlitten, an der Schiene oder an beiden angebracht sein. Je nach Anwendung kann auch die Nutzlast PL selbst in den Regelkreis einbezogen werden, um die Rückkopplungsschleife zu verbessern.
e) Schlitten- und Nutzlast-Schnittstellen:
   Bereitstellung von Schnittstellen für Nutzlasten und bodengestützte Ausrüstung für die Interaktion mit dem Prüfstand. Dies beinhaltet eine
      - Schlittenschnittstelle: Die Schnittstelle zwischen der Schiene und dem Schlitten kann entweder verdrahtet, drahtlos oder mit einer anderen Kontaktmechanik ausgestattet sein.
      - Schnittstellen für Nutzlasten PL:
   Die Nutzlasten können entweder direkt mit der Bodenausrüstung kommunizieren oder über die Schnittstelle des Schlittens für die Daten-, Strom- und Wärmeübertragung huckepack genommen werden.
      - Nutzlast-Bodengeräte, zu denen Stromquellen, Wärmemanagementsysteme, Datenerfassungsgeräte und andere für den Betrieb der Nutzlast PL erforderliche Zusatzgeräte gehören, die je nach den Anforderungen der Nutzlast PL auf verschiedenen Ebenen miteinander verbunden werden können.

Die physische Architektur der Testvorrichtung 1 (MVMS) umfasst:
- Hardwarekomponenten wie Sensoren, Aktoren, Steuerungen, Netzteile und Kommunikationsmodule.
- Softwareanwendungen, die auf den Hardwarekomponenten ausgeführt werden, um bestimmte Aufgaben zu erfüllen. Dazu gehören Echtzeitbetriebssysteme (RTOS), Middleware, Anwendungssoftware und Benutzerschnittstellen.
- Netzwerkinfrastruktur, einschließlich kabelgebundener und drahtloser Netzwerke, um die Kommunikation zwischen Hardwarekomponenten und Softwareanwendungen zu erleichtern.
- Mechanische Baugruppen, in denen die Hardwarekomponenten untergebracht sind und die das System strukturell unterstützen.
- Prüfstandeinrichtungen einschließlich der Umweltkontrollsysteme, der Stromverteilung und der Sicherheitsverriegelungen zur Gewährleistung eines sicheren Betriebs in einer Testumgebung.

### Sicherheits und Schutzsystem

Es kann ein Sicherheits und Schutzsystem vorhanden sein, um die Integrität der Komponenten der Testvorrichtung 1, die Sicherheit des Personals und die ordnungsgemäße Funktion des Systems in allen Betriebsphasen zu gewährleisten. Das Sicherheits- und Schutzsystem umfasst eine Vielzahl von Funktionen, wie z. B.:
a) Verriegelungsmechanismen, die unsichere Operationen verhindern und vor Hardwareausfällen oder Softwarefehlern schützen, wie z. B.:
   - Not-Aus-Tasten, mit denen das System im Notfall sofort abgeschaltet werden kann.
   - Endschalter und andere mechanische Verriegelungen, die Bewegungen über sichere Grenzen hinaus verhindern.
   - Software-Schutzmaßnahmen, die anormale Bedingungen erkennen und darauf reagieren können, wie z. B. Fehler-Erkennungs- und Isolierungsalgorithmen, die fehlerhafte Komponenten oder Teilsysteme identifizieren und isolieren können und redundante Systeme, die im Falle eines Ausfalls des Primärsystems automatisch auf ein Backup-System umschalten können.
b) Schutz der Nutzlast: Die Nutzlast kann durch eine Reihe von Mechanismen geschützt werden, umfassend
   - Überstrom-, Überspannungs-, Unterspannungs- und Übertemperaturschutz zur Vermeidung von Schäden an der Nutzlast aufgrund von übermäßiger Leistung oder Temperaturbedingungen.
   - Mechanische Schock- und Vibrationserkennung, um mögliche Schäden während des Betriebs zu erkennen.
   - Umgebungskontrollsysteme, die die Betriebsbedingungen der Nutzlast innerhalb bestimmter Bereiche aufrechterhalten können, z.B. Temperatur, Feuchtigkeit, elektromagnetische, seismische und Druckverhältnisse.
   - Mechanismen für die Notabschaltung und die Behandlung von Fehlersignalen zum Schutz der Nutzlast PL während des Betriebs, z.B. ausgelöst durch die Nutzlast PL oder die bodengestützte Nutzlastausrüstung.
c) Schutz der Einrichtung:
   - Zustandsüberwachungssystem, das anormale Bedingungen in der Anlage, wie Stromausfälle oder Temperaturschwankungen, erkennen und darauf reagieren kann, indem es die Testvorrichtung 1 (MVMS) bei Bedarf automatisch abschaltet.

### Kontrollsystem

Die Architektur des Kontrollsystems für die Testvorrichtung 1 (MVMS) ist modular, skalierbar und flexibel und ermöglicht auch zukünftig die einfache Integration neuer Technologien, sobald diese verfügbar sind oder für zukünftige Missionen benötigt werden. Die wichtigsten Funktionalitäten des Kontrollsystems sind:
- Test Management;
- Vibrationskontrolle;
- Umweltkontrolle.

### Mensch-Maschine-Schnittstelle (HMI)

Zu den wichtigsten Komponenten des Kontrollsystems gehören:
- Universalcomputer oder -server, auf dem die höchste Softwareebene läuft, z. B. die Testverwaltung und die Mensch-Maschine-Schnittstelle (HMI), die für die gesamte Systemüberwachung, Steuerung, Datenerfassung und Kommunikation mit anderen Systemen und Komponenten zuständig ist. Auf diesem Computer oder Server laufen auch das Betriebssystem und die Middleware, die die Kommunikation zwischen den verschiedenen Softwaremodulen und Hardware-Schnittstellen erleichtern.
- Echtzeitbetriebssystem oder Hardware-Echtzeitsoftware, die auf einer speziellen Hardwareplattform läuft, die für die Ausführung von Low-Level-Steuerungsalgorithmen verantwortlich ist und gewährleistet, dass die Testvorrichtung 1 (MVMS) unter allen Bedingungen sicher und effizient arbeitet. Dieses System umfasst in der Regel spezielle Hardware-Beschleuniger wie FPGAs ("Field-Programmable Gate Arrays") oder anwendungsspezifische integrierte Schaltungen (ASICs), um die Leistung und Zuverlässigkeit zu verbessern. Dieses Element beherbergt die Software- und Hardwareschnittstellen für die Vibrationskontrolle und die Umweltkontrolle.
- Eine Reihe von Softwaremodulen oder -anwendungen, die auf einem Universalcomputer oder Server laufen und für bestimmte Aufgaben wie Datenerfassung, -verarbeitung, -visualisierung und Gestaltung der Benutzeroberfläche zuständig sind. Diese Module können kundenspezifische Software umfassen, die speziell für die Testvorrichtung 1 (MVMS) entwickelt wurde, sowie Software von Drittanbietern, die über Anwendungsprogrammierschnittstellen (APIs) in das System integriert werden kann.
- Eine Reihe von Hardwareschnittstellen oder Geräten, die die Testvorrichtung 1 (MVMS) mit externen Systemen wie Sensoren, Aktoren, Stromversorgungen und Kommunikationsnetzwerken verbinden. Diese Schnittstellen können sowohl kundenspezifische Hardware umfassen, die speziell für das MVMS entwickelt wurde, als auch handelsübliche Komponenten, die über Standardschnittstellen wie Ethernet, USB, RS-232/RS-485 oder CAN-Bus leicht in das System integriert werden können.

Ein Vibrationskontrollmodul ist für die Überwachung der Schwingungspegel der Nutzlast verantwortlich, analysiert diese in Echtzeit und erzeugt Steuersignale zur Anpassung der Position oder Ausrichtung der Nutzlast, um die Schwingungen zu minimieren. Das Vibrationskontrollmodul kann Rückmeldungen von Sensoren wie Beschleunigungsmessern oder Gyroskopen nutzen, die an der Nutzlast angebracht sind, und es kann auch mit anderen Modulen innerhalb des MVMS kommunizieren, um seine Aktionen mit anderen Systemkomponenten zu koordinieren.

### Nutzlast Bodenunterstützungsausrüstung

Das Ground Support Equipment (GSE) für die Nutzlast PL umfasst eine Reihe von Werkzeugen, Geräten und Systemen, die dazu dienen, die Nutzlast PL während ihres Einsatzes oder Betriebs am Boden vor, während und nach dem Start zu unterstützen. Das GSE kann verschiedene Arten von Geräten wie Kräne, Rollwagen, Laufkatzen, Aufzüge, Aktuatoren, Motoren, Steuerungen, Sensoren und Softwareanwendungen umfassen, die eine sichere und effiziente Handhabung und Manipulation der Nutzlast ermöglichen.

### Nutzlast

Die Nutzlast PL ist die wichtigste zu prüfende Komponente der MVMS-Architektur. Es wird erwartet, dass die Nutzlast PL ein komplexes System mit mehreren Komponenten und Subsystemen ist, die während des Einsatzes oder des Betriebs am Boden überwacht, gesteuert und getestet werden müssen. Die Nutzlast PL kann verschiedene Arten von Hardware wie Sensoren, Aktoren, Motoren, Steuerungen und Softwareanwendungen umfassen, die ihre Funktionalität und Leistung ermöglichen.

### System zur Schwingungserzeugung

Das Schwingungserzeugungssystem ist eine entscheidende Komponente der MVMS-Architektur, die für die Erzeugung kontrollierter Schwingungen verantwortlich ist, um die Robustheit und Leistung der Nutzlast PL unter verschiedenen Umweltbedingungen zu testen. Das Schwingungserzeugungssystem kann Folgendes umfassen:
- Schienen oder Gleise, die den Schlitten (eine Plattform, die die Nutzlast trägt) tragen, während er sich während der Vibrationsprüfung auf den Schienen bewegt.
- den Schlitten selbst, der mit Schwingungssensoren ausgestattet sein kann, um die Amplitude und Frequenz der Schwingungen zu messen.
- die auf dem Schlitten in einer definierten Vorrichtung montierte Nutzlast, die während der Prüfung Schwingungen ausgesetzt ist
- eine Bewegungssteuerungseinheit, welche die Aktoren antreibt, um die gewünschten Schwingungsmuster und -amplituden zu erzeugen, die Leistung der Aktoren entweder durch die Rückmeldung des Aktortreibers überwacht oder die Schwingungssensoren, die am Schlitten, an der Nutzlast, an den Schienen oder Bahnen oder an anderen relevanten Komponenten angebracht sind, ausliest, um sicherzustellen, dass die Schwingungsprüfung genau und effizient durchgeführt wird.
- eine Schnittstelle zwischen der Schiene und dem Schlitten (oder der Nutzlast), die dazu verwendet werden kann, um eine Schnittstelle zum Schlitten bereitzustellen, eine Schnittstelle zur Nutzlast bereitzustellen und/oder eine Verbindung zwischen der Bewegungssteuerungseinheit und dem Schlitten oder der Nutzlast für die Datenübertragung und Rückmeldung bereitstellen.

Die Schnittstellen können mindestens eine Schnittstelle aus der Gruppe umfassen von:
- mechanischen Schnittstellen,
- elektrischen Schnittstellen,
- thermischen Schnittstellen,
- chemischen/pneumatischen/hydraulischen und/oder
- anderen Schnittstellen, die zur Gewährleistung der Kompatibilität der Komponenten des Systems erforderlich sind.

### Schiene, Schlitten und Aktuatoren

Das Kernelement der Testvorrichtung 1 sind die Schiene, der Schlitten und die Aktuatoren. Ihre Konstruktion trägt entscheidend dazu bei, dass das System robust und zuverlässig ist und genaue und wiederholbare Schwingungsmuster erzeugen kann.
a) Schiene:
   Der Begriff Schiene wird für jede Struktur, jedes Volumen oder jede Oberfläche verwendet, die den Weg für die Bewegung des Schlittens vorgibt. Dazu können mechanische Schienen, lineare Führungen, Gleise, Schlitten, Luftlager, elektromagnetische und elektrodynamische Führungen, Kanäle oder andere ähnliche Strukturen gehören, die dem Schlitten einen Weg bieten, auf dem er sich bewegen kann. Darüber hinaus kann ein Teil der Betätigungskraft auch über die Schienenstruktur auf den Schlitten und die Nutzlast übertragen werden, z. B. durch die Erzeugung mechanischer Kontaktkräfte, hydraulischer oder pneumatischer Strömungen, elektromagnetischer Kräfte oder Ähnliches. Die Schienen können unterschiedliche Geometrien (gerade, gebogen, schraubenförmig usw.), Materialien (Stahl, Aluminium, Kohlefaserverbundwerkstoffe usw.) und
   Oberflächenbeschaffenheiten (rau, poliert, strukturiert usw.) aufweisen. Das Schienendesign sollte Faktoren wie Steifigkeit, Festigkeit, Wärmeausdehnung, Verschleißfestigkeit und die Fähigkeit, die Schlittenbewegung mit minimaler Reibung zu bewältigen, berücksichtigen. Wichtig ist auch, dass die Schienen so konstruiert sind, dass sie andere Komponenten des Systems nicht beeinträchtigen oder während des Betriebs ein Sicherheitsrisiko darstellen. Ein Teil der Mess- und Steuersysteme kann in die Schienenstruktur integriert werden.
b) Schlitten:
   Ein Schlitten ist eine Plattform oder ein Wagen, der auf der Schiene fährt und die Nutzlast während der Vibrationsprüfung trägt. Der Schlitten kann so konstruiert sein, dass er verschiedene Arten von Nutzlasten aufnehmen kann, wie z. B. elektronische Geräte, mechanische Komponenten oder große Baugruppen. Der Schlitten selbst kann Mechanismen zur Einstellung der Position und Ausrichtung der Nutzlast relativ zur Schiene enthalten, wie z. B. einstellbare Aktuatoren, Lager, Kardanringe oder andere Positionierungsvorrichtungen. Bei der Konstruktion des Schlittens sollten sein Eigengewicht, seine Steifigkeit und seine Fähigkeit, sich ohne übermäßige Reibung auf der Schiene zu bewegen, berücksichtigt werden. Wichtig ist auch, dass der Schlitten so konstruiert ist, dass er für die Wartung und Kalibrierung der Nutzlast und der Prüfgeräte leicht zugänglich ist. Außerdem kann ein Teil der Betätigungskraft durch die Schlittenstruktur auf die Schiene oder die Nutzlast übertragen werden. Der Schlitten kann verschiedene Geometrien haben, um unterschiedlichen Nutzlasten und Prüfanforderungen gerecht zu werden. Die für den Bau des Schlittens verwendeten Materialien sollten anhand ihrer Eigenschaften in Bezug auf Gewicht, Steifigkeit, Dämpfung und Umweltbeständigkeit ausgewählt werden, um sicherzustellen, dass sie die Anforderungen für die spezifischen Prüfbedingungen erfüllen. Ein Teil der Mess- und Steuersysteme kann auch in den Schlitten integriert werden, um die Datenerfassung und -analyse zu erleichtern.
c) Aktuatoren:
   Aktuatoren sind Geräte, die Energie in Bewegung oder Kraft umwandeln, um den Schlitten als Reaktion auf Steuersignale von einer Bewegungssteuerung entlang der Schiene zu bewegen. Es gibt verschiedene Arten von Aktuatoren, die üblicherweise in der Bewegungssimulation und in Transportsystemen verwendet werden, jeder mit seinen eigenen Vorteilen und Einschränkungen. Die Liste der in Frage kommenden Aktuatoren umfasst unter anderem:
   1. mechanische Systeme
      - Schienen: Lineare Führungen oder Schienen
      - Gewindespindeln und Kugelgewindetriebe
      - Riemen- und Riemenscheibensysteme
      - Zahnstange und Ritzel
      - Nockenstößel-Mechanismen
      - kabelgebundene Systeme
      - Schwenkantriebe
   2. pneumatische Systeme
      - pneumatische Zylinder
      - pneumatische Federungssysteme
      - pneumatisch angetriebene Riemen und Riemenscheiben
      - Luftdüsen und Lager
   3. hydraulische Systeme
      - Hydraulik-Zylinder
      - Hydraulische Motoren
      - Hydraulische Schienen- und Gleissysteme
   4. elektromagnetische Systeme
      - Elektromagnetische Levitation (Maglev)
      - Elektrodynamische Aufhängung (EDS)
      - Lineare Induktionsmotoren
      - Voice Coil Actuators (VCA) und Solenoid Actuators
   5. magnetische Systeme
      - Magnetische Levitation (Maglev)
      - Halbach-Arrays
      - Magnetische Lager und Aufhängungen
   6. luftgestützte Systeme
      - Luftgelagerte Tische und Schlitten
      - Luftstrahlförderer
      - Luftkissenfahrzeuge (ACV) und Systeme
      - Luftfederung: Liftin(Bernoulli), Magnus-Effekt, Coanda-Effekt
   7. reibungstragende Systeme
      - Reibschlüssige Antriebe (Rollkontakt)
      - Räder-Systeme - Rotations-Reibradantriebe
   8. intelligente Werkstoffe und fortgeschrittene Systeme
      - Formgedächtnis-Legierungen (SMA)
      - Piezoelektrische Aktuatoren
      - Magnetostriktive Aktuatoren
      - magnetorheologische Flüssigkeiten (MRF)
   9. auf Levitation basierende Systeme
      - Quantenelevitation (supraleitende Levitation)
      - Diamagnetische Levitation (DML)
   10. robotergestützte Systeme
      - Gantry-Roboter
      - SCARA (Selective Compliant Articulated Robot Arm) Roboter
      - Artikulierte Roboterarme (ARMs)
      - Parallelroboter
   11. lineare Motoren
      - Linear-Aktuatoren (LAs): Direkter Antrieb, Indirekter Antrieb
      - Linear- Servomotoren: Bürstenloser DC (BLDC), AC (ACSM)
   12. Vibrations- und Ultraschallsysteme
      - Ultraschallmotoren und -aktuatoren
      - vibrationsgestützte Transportsysteme und Förderer
   13. Seil- und Flaschenzugsysteme
      - kabelgetriebene Parallelroboter
   14. Rollende Systeme
      - Kugelgelagerte Schlitten
      - Rollende Roboter in Kugelform
      - Omniwheels und Mecanum-Räder
   15. gefesselte Systeme
      - Fesselnde Betätigungssysteme
      - Gespannte Systeme (Zugbetätigung).

Es können auch mehrere unterschiedliche Aktuatortypen kombiniert werden, um hybride Systeme zu schaffen, die bei bestimmten Anwendungen eine bessere Leistung bieten. So kann beispielsweise eine Kombination aus elektromagnetischen und pneumatischen Aktuatoren schnellere Reaktionszeiten bei gleichmäßiger Bewegung ermöglichen. Die Wahl des Aktuators hängt von den Anforderungen des Systems ab, einschließlich Geschwindigkeit, Kraft, Präzision, Zuverlässigkeit, Kosten und Umweltbedingungen.

### Sensoren und Bewegungssteuerungseinheit

Für das System zur Schwingungserzeugung sind die Sensoren für die Überwachung der Leistung der Aktoren während der Schwingungsprüfung vorgesehen. Die verwendeten Sensoren können aus der Gruppe ausgewählt sein von:
- Trägheitssensoren, wie Beschleunigungsmesser und Gyroskope
- Optische Sensoren wie Infrarot, Laserentfernungsmesser und -verfolger, Flugzeitmessung, strukturiertes Licht, Phasenverschiebungskameras, LIDAR
- Akustische Sensoren, wie z. B. Ultraschallsensoren, Dopplerradarsensoren, Mikrofonarrays
- Magnetische Sensoren, wie Hall-Effekt-Sensoren und Magnetometer
- kapazitive Sensoren, wie z. B. kapazitive Näherungssensoren
- Piezoelektrische Sensoren, wie z. B. piezoelektrische Beschleunigungsmesser und Drucksensoren
- Resistive Sensoren, wie Dehnungsmessstreifen
- Induktive Sensoren, wie induktive Näherungssensoren und lineare variable Differentialtransformatoren (LVDT)
- Elektromagnetische Sensoren, wie z. B. Wirbelstromsensoren
- Photonische Sensoren, wie Photodioden, Phototransistoren, photovoltaische Zellen, faseroptische Sensoren, optische Durchflusssensoren, interferometrische Sensoren
- Quantenpunktsensoren, wie z. B. Quantenpunkt-Bewegungssensoren
- Thermische Sensoren, wie z. B. pyroelektrische Sensoren, Thermistoren, Thermoelemente und Temperatursensoren auf Halbleiterbasis
- Radargestützte Sensoren, wie Millimeterwellenradar (mmWave), FMCW-Radar, Puls-Doppler-Radar usw.
- Chemische/Bio-Sensoren, wie z. B. Sensoren mit galvanischer Reaktion
- Gravimetrische Sensoren,
- Mechanische Sensoren, wie z.B. mechanische Schalter, Endschalter, Reed-Schalter, Mikroschalter, etc.
- Bildverarbeitungssysteme wie Computer-Vision-Systeme, Maschinen-Visions-Systeme, Stereo-Visions-Systeme, einschließlich optischer Fluss, Feature-Tracking oder Motion-Augmentation-Techniken.
- Fluidsensoren, wie z. B. Drucksensoren, Durchflusssensoren, Füllstandssensoren, Temperatursensoren, usw.
- Mikro-Elektro-Mechanische Systeme (MEMS) Sensoren, wie Beschleunigungsmesser, Gyroskope, Magnetometer, Drucksensoren, Mikrofone, usw.
- Sonstige: Dopplereffekt-Sensoren, Hybridsensoren (Sensorfusion), usw.

Alle diese Arten von Sensoren können verwendet werden, um die Bewegung in bis zu 6 Freiheitsgraden (DoF) von Mehrkörperelementen für die Testvorrichtung 1 (MVMS) zu ermitteln. Die Sensoren können sich an verschiedenen Positionen auf der Schiene, dem Schlitten, der Anlage oder sogar entfernt von der Anlage befinden. Die Sensordaten werden von der Motion Control Unit (MCU) oder direkt vom Steuerungssystem erfasst. Alle diese Sensortypen wurden bereits für verschiedene Anwendungen in unterschiedlichen Branchen wie Automobil, Luft- und Raumfahrt, Verteidigung, Robotik usw. eingesetzt. Die Sensoren können mit anderen Systemen integriert werden, um zusätzliche Funktionen zu bieten oder die Leistung des MVMS zu verbessern.

Es können allgemein auf dem Markt erhältliche Sensoren genutzt werden, wie z.B. Beschleunigungsmesser, Gyroskope, Magnetometer, Encoder oder Interferometer. Diese Sensoren werden zur Messung der linearen Beschleunigung, der Winkelgeschwindigkeit, des Magnetfelds, der Position usw. verwendet. Die Messbereiche dieser Sensoren entsprechen weitgehend den geforderten Bewegungsumfängen (Nanometer/Milligramm-Auflösung). Die Sensordaten werden von der MCU oder direkt vom Kontrollsystem verarbeitet, um die Bewegungsinformationen des MVMS bereitzustellen.

Die Bewegungssteuerungseinheit (MCU) ist für die Verarbeitung der Sensordaten und die Erzeugung der Steuersignale zur Ansteuerung der Aktoren oder Motoren zuständig, die zur Bewegung des MVMS verwendet werden. Da die Art der Betätigung unterschiedlich sein kann (z. B. Linearantriebe, Drehantriebe, pneumatische Antriebe, elektromagnetische, elektrodynamische Antriebe, Quantenschwebetechnik usw.), muss die MCU in der Lage sein, verschiedene Arten von Antriebssystemen und Treibern zu verarbeiten. Die MCU kann aus verschiedenen Hardware-Konfigurationen bestehen, wie z. B.:
- Einplatinencomputer
- Echtzeit-Computer
- programmierbare Gate-Arrays (FPGAs)
- Anwendungsspezifische integrierte Schaltungen (ASICs)
- elektromechanische Systeme
- Kommunikationsmodule
- optische Elemente.

Die MCU sollte außerdem über eine robuste Softwarearchitektur verfügen, die Echtzeit-Steuerungsalgorithmen, Sensorfusionstechniken, Zustandsschätzung, Flugbahnplanung und Kommunikationsprotokolle mit anderen Systemen oder Geräten beherrscht. Die Softwarearchitektur sollte modular und skalierbar sein, um zukünftige Upgrades und Änderungen zu ermöglichen. Das Design der MCU hängt von den spezifischen Anforderungen der Anwendung ab, wie z. B. der Komplexität der Bewegungssteuerungsaufgaben, der für die Echtzeitverarbeitung erforderlichen Rechenleistung, den verfügbaren Ressourcen (z. B. Arbeitsspeicher, Speicher, Bandbreite) und der Integration mit anderen Systemen oder Geräten.

### Allgemeine Anforderungen an die Testvorrichtung

Die allgemeinen Anforderungen an die Einrichtung einer Testvorrichtung 1 (MVMS) lassen sich in drei Hauptbereiche unterteilen: physischer Raum, Umgebungsbedingungen und betriebliche Beschränkungen. Diese Faktoren beeinflussen den Entwurf und die Implementierung der Systemarchitektur, einschließlich der Auswahl von Komponenten, Sensoren, Aktoren, Kommunikationsschnittstellen, Stromversorgungen und anderen verwandten Elementen. In den folgenden Abschnitten werden die einzelnen Aspekte ausführlich erörtert:
a) Physikalischer Platz:
   Der Platzbedarf für eine Testvorrichtung 1hängt von mehreren Faktoren ab, u. a. von der Größe und Konfiguration der Systemkomponenten, der Anzahl und Anordnung der Sensoren und Aktoren, dem Bedarf an Belüftungs- oder Kühlsystemen und der Zugänglichkeit für Wartung und Upgrades. Im Allgemeinen sollte der Raum so konzipiert sein, dass er den Betriebsanforderungen des Systems gerecht wird und gleichzeitig andere Einrichtungen oder Aktivitäten möglichst wenig beeinträchtigt. Ausgehend von den Planungsfaktoren und -erfordernissen sollte eine Schiene von 10 bis 20 Metern Länge in einer Anlage industrieller Größe ausreichend Platz bieten. Bei der Gestaltung des physischen Raums sollten auch Faktoren wie Sicherheit und Ästhetik berücksichtigt werden.
b) Umwelteinflüsse:
   Die Umgebungsbedingungen können die Leistung und Zuverlässigkeit einer Testvorrichtung 1 beeinflussen. Dazu gehören Temperatur, Feuchtigkeit, Vibration, elektromagnetische Interferenz (EMI) und andere Faktoren, die den Betrieb oder die Genauigkeit von Sensoren und Aktoren beeinträchtigen können. Die Umgebungsbedingungen sollten in der Entwurfsphase berücksichtigt werden, um geeignete Komponenten mit geeigneten Betriebsbereichen und Toleranzen auszuwählen. Darüber hinaus sollte die Einrichtung über eine kontrollierte Umgebung verfügen, um eine optimale Leistung unter verschiedenen Bedingungen zu gewährleisten. Die Anlage sollte mit HVAC-Systemen, Temperatursteuerungseinheiten und anderen Umweltmanagementinstrumenten ausgestattet sein, um optimale Bedingungen für den Betrieb des MVMS zu gewährleisten. Außerdem müssen in kritischen Bereichen, in denen elektromagnetische Störungen auftreten, möglicherweise EMI-Abschirmungsmaterialien oder Filter verwendet werden. Darüber hinaus sollten bei der Auswahl und Ausstattung der Einrichtung auch seismische und akustische Aspekte berücksichtigt werden.
c) Betriebliche Zwänge:
   Zu den betrieblichen Einschränkungen können Faktoren wie Systemverfügbarkeit, Skalierbarkeit, Interoperabilität mit anderen Systemen oder Geräten, Datensicherheit und Einhaltung gesetzlicher Vorschriften gehören. Das MVMS sollte so konzipiert sein, dass es die betrieblichen Anforderungen der Einrichtung erfüllt und gleichzeitig das Potenzial für zukünftige Erweiterungen oder Aufrüstungen berücksichtigt. Darüber hinaus sollte das System den einschlägigen Vorschriften und Normen entsprechen, einschließlich derer, die sich auf Sicherheit, Qualität, Umweltschutz und Datenschutz beziehen. Um die Interoperabilität zu gewährleisten, sollte das MVMS Standard-Kommunikationsprotokolle und Schnittstellen unterstützen, die leicht mit anderen Systemen oder Geräten integriert werden können. Die Sicherheitsmaßnahmen sollten Authentifizierungs-, Autorisierungs-, Verschlüsselungs- und Überwachungswerkzeuge umfassen, um sensible Informationen zu schützen und unbefugten Zugriff zu verhindern.

### Beispiel für die Implementierung des MVMS

In den folgenden Abschnitten werden möglicherweise die folgenden Begriffe verwendet:
- Fahrzeug : bezieht sich auf die Kombination des Schlittens mit einer montierten Nutzlast und einem daran angebrachten Antrieb oder Sensor. Die Nabe kann teilweise als Fahrzeug, teilweise als Schiene, teilweise als Einrichtung oder als eine Kombination dieser Elemente betrachtet werden, je nachdem, wie sie verwendet wird.

### 5. 1Beispielszenario Beschreibung

In den Beispielen werden wir die folgenden Bewegungsmodi implementieren:
Das erste Beispiel konzentriert sich auf eine einfache Implementierung, bei der das MVMS zur Steuerung eines einzelnen Fahrzeugs verwendet wird und nur die Schwingungen in einer einzigen Richtung, z. B. der X-Achse, kontrolliert. Die anderen Achsen werden so gesteuert, dass der Lärm so weit wie möglich reduziert und minimiert wird.
Im zweiten Szenario geht es um die Steuerung eines einzigen Fahrzeugs, bei dem jedoch mehrere Achsen aktiv vom MVMS gesteuert werden, um Mikrovibrationen zu erzeugen. Dieses Beispiel ist komplexer als das erste, da es darum geht, mehrere Schwingungsquellen gleichzeitig zu steuern und sie effektiv zu koordinieren.
Das dritte Szenario konzentriert sich auf ein einzelnes Fahrzeug, bei dem eine der Achsen, z. B. die X-Achse, aktiv mit zwei verschiedenen Aktuatoren gesteuert wird, um Kopplungseffekte zu erzeugen, die eine bessere Kontrolle über einzelne Schwingungsamplituden und Frequenzbereiche ermöglichen.

Das gesamte Szenario findet in einer Umgebung statt, die den realen Bedingungen einer Test- und Validierungseinrichtung entspricht. Die Einrichtung kann sich in einem Gebäude in einer allgemeinen Industrie-/Forschungsumgebung befinden.

Die Testvorrichtung 1 kann in einem allgemeinen Industrie-/Forschungsumfeld angesiedelt sein, das verschiedene Gebäudetypen wie Lagerhäuser, Labors oder Produktionsanlagen umfassen kann. Es ist zu beachten, dass die gesamte Infrastruktur der Testvorrichtung 1 den Prüf- und Validierungsprozess erheblich beeinflussen kann. Wenn zum Beispiel andere Maschinen in der Nähe in Betrieb sind, können deren Vibrationen die Prüfergebnisse beeinträchtigen. Einige bekannte Beispiele hierfür sind:
- Straßen und Autobahnen in der Nähe können erhebliche Bodenschwingungen verursachen, die die Fahrzeugdynamik beeinträchtigen können.
- Schienen oder Gleise in der Nähe können ebenfalls Vibrationen verursachen, die von den Sensoren des Fahrzeugs erfasst werden können.
- Hochspannungsleitungen, insbesondere wenn sie sich in der Nähe des Prüfbereichs befinden, können elektromagnetische Felder erzeugen, die möglicherweise unerwünschte elektrische Störungen und Interferenzen mit den Sensorsystemen verursachen können.
- Industrielle Prozesse wie Schweißen oder der Einsatz schwerer Maschinen können ebenfalls erheblich zu den Vibrationen in der Umgebung beitragen, z. B. in Steinbrüchen, auf Baustellen oder in Industriekomplexen.

Auch allgemeine Umgebungsbedingungen des Standorts können sich auf den Betrieb der Testvorrichtung 1 und ihrer Wirksamkeit bei der Bekämpfung von Vibrationen auswirken:
- Seismische Aktivitäten (Erdbeben) könnten ein bedeutender Faktor sein, wenn sich die Anlage in einem Gebiet befindet, das für solche Ereignisse anfällig ist. Dies würde zusätzliche Sensoren und möglicherweise ausgefeiltere Algorithmen erfordern, um dynamische Bodenbewegungen zu verarbeiten, die die Fahrzeugdynamik beeinträchtigen könnten. Alternativ müssen für empfindliche Geräte wie MVMS-Systeme möglicherweise seismisch isolierte Halterungen oder andere Abfederungstechniken in Betracht gezogen werden.
- Extreme Temperaturen (heiß oder kalt) können die Leistung der elektronischen Komponenten im System beeinträchtigen, was sich auf die Zuverlässigkeit und Genauigkeit des Systems auswirken kann. Spezielle Umweltprüfkammern oder Temperaturkontrollmechanismen können erforderlich sein, um einen optimalen Betrieb unter solchen Bedingungen zu gewährleisten.
- Allgemeine atmosphärische Bedingungen wie Luftfeuchtigkeit, Luftdruck und Salzgehalt der Luft können die Funktion der Testvorrichtung 1 (MVMS) ebenfalls beeinträchtigen, da sie sich in einem nicht evakuierten (oder mit Inertgas wie He oder N2 gefüllten) Testaufbau auswirken können. Auch die Aerodynamik ist bekanntlich eine häufige Fehlerquelle bei Bewegungssimulations- oder Vibrationstests.

Die Größe und der Platzbedarf der Testvorrichtung 1 (MVMS) hängen von mehreren Faktoren ab, wie bspw. die Länge der verwendeten Schiene und die Art der Maßnahmen zur Verringerung der standortbezogenen Einflüsse (wie im vorherigen Abschnitt erwähnt).

Im Allgemeinen wird ein Mindestabstand von 10 Metern zwischen den Schienen und allen festen Strukturen oder Gegenständen empfohlen, die den Betrieb der Testvorrichtung 1 (MVMS) beeinträchtigen könnten. Dadurch kann die Gesamtwirkung der aerodynamischen Kräfte, die während der Prüfszenarien unsymmetrisch auf den Fahrzeugaufbau wirken, verringert werden.

Vorteilhaft ist es, eine Schiene mit einer Länge von etwa 10 bis 12 Metern zu realisieren. Dies berücksichtigt:
- Sicherheitsfaktoren und Puffer an den Enden (um mögliche Kollisionen zu vermeiden),
- Drift, z.B. wenn der Ursprung der relativen Messung aufgrund der Art der verwendeten Sensoren abdriftet, wie es bei Trägheitsmessungen der Fall ist.

Zudem muss weiterer Raum zur Verfügung gestellt werden für:
- die Positionierung und Ausrichtung von Stellgliedern oder Antrieben,
- die Positionierung und Ausrichtung der Sensoren entlang der Schiene,
- Stromversorgungen, Datenerfassungssysteme und andere elektronische Komponenten, die für den Betrieb des MVMS erforderlich sind,
- Tragende Strukturen und Mechanismen (wie Aktuatoren oder Linearlager), die die Schienen in Position halten werden.

Die Auswahl der Stellantriebseinheiten (AU) und deren Konfiguration kann im Hinblick auf folgende Kriterien erfolgen:
- Kosten der Maßnahme
- Stromverbrauch/Verbrauchsmaterial
- Umgebungsbedingungen (Temperatur, Feuchtigkeit), unter denen sie arbeiten
- Hintergrundgeräuschpegel, wie z.B. mechanische Schwingungen, Elektromagnetische Störungen und akustischer Schallpegel

Die Antriebsmethoden können für die Anwendung in den Umsetzungsbeispielen kombiniert werden, je nach dem Grad der Präzision und Kontrolle, der für jede spezifische Anwendung erforderlich ist, unabhängig von den Betriebskosten, die nicht als Hauptproblem bei der Umsetzung ermittelt wurden.

Mechanische Antriebe, wie z.B. pneumatische oder hydraulische Systeme, sind in der Lage, eine hohe Kraft und eine präzise Kontrolle über die Bewegung der Aktuatoren zu liefern. Sie können verwendet werden, um das Fahrzeug über die Schiene zu bewegen, und werden oft in Schwerlastanwendungen eingesetzt, bei denen Zuverlässigkeit und Haltbarkeit entscheidend sind. Sie sind jedoch unter Umständen wartungsintensiver und weniger energieeffizient als andere elektrische Betätigungsmethoden. Außerdem sind sie möglicherweise nicht für Anwendungen geeignet, bei denen eine raue Umgebung herrscht oder ein hohes Maß an Präzision und Kontrolle erforderlich ist (Milligramm-Präzision, Hochfrequenz). Darüber hinaus können sie erhebliche Geräusche und Vibrationen erzeugen, die den Betrieb der Testvorrichtung 1 oder der umliegenden Geräte stören könnten, verursacht durch:
- Kontaktreibung zwischen beweglichen Teilen, wie z. B. der Schiene und dem Gleitmechanismus,
- unter Druck stehende Flüssigkeit, die zum Antrieb der Aktoren verwendet wird,
- Lagerreibung und Dynamik,
- Motoren und Getriebe.

Elektromagnetische Antriebe, wie Magnetspulen oder Schwingspulen, nutzen Magnetfelder zur Erzeugung von Kraft und Bewegung. Sie sind in der Regel kompakter und leichter als mechanische Aktuatoren, was bei bestimmten Anwendungen von Vorteil sein kann, bei denen der Platz begrenzt ist oder eine Gewichtsreduzierung wichtig ist. Allerdings haben sie im Vergleich zu pneumatischen oder hydraulischen Systemen eine geringere Kraftausbeute und erfordern unter Umständen komplexere Steuerschaltungen, um eine präzise Bewegungssteuerung zu erreichen. Außerdem können sie während des Betriebs erhebliche Wärme erzeugen, was die Leistung oder Zuverlässigkeit der Testvorrichtung 1 in bestimmten Umgebungen beeinträchtigen könnte.

Prominente Beispiele für die elektromagnetische Betätigung auf Schienen sind Magnetschwebebahnen, die elektromagnetische Kräfte nutzen, um einen Eisenbahnzug über einer Schiene schweben zu lassen und anzutreiben.

Elektrodynamische Antriebe wie Linearmotoren oder Schwingspulen nutzen die Wechselwirkung zwischen elektrischen Strömen und Magnetfeldern, um Kraft und Bewegung zu erzeugen. Aufgrund der direkten Umwandlung von elektrischer Energie in mechanische Arbeit sind sie oft effizienter als elektromagnetische Aktuatoren. Sie erfordern jedoch unter Umständen komplexere Steuersysteme, um eine präzise Bewegungssteuerung zu erreichen, und können aufgrund der Komplexität ihrer Konstruktion höhere Anschaffungskosten verursachen. Außerdem können sie während des Betriebs erhebliche Wärme erzeugen, was die Leistung oder Zuverlässigkeit der Testvorrichtung 1 in bestimmten Umgebungen beeinträchtigen könnte.

Prominente Beispiele für elektrodynamische schienenbasierte Antriebe sind:
- Lineare Induktionsmotoren (LIMs), die in einigen Hochgeschwindigkeitszügen eingesetzt werden und die Antriebskraft durch die Bewegung eines Magnetfelds entlang der Motorlänge erzeugen,
- Linearmotoren, die in fahrerlosen Transportsystemen (AGVs) und anderen Materialtransportanwendungen eingesetzt werden und eine präzise Positionierung und hohe Beschleunigung ermöglichen,
- Elektrodynamische Aufhängungssysteme wie Magnetschwebebahnen, die elektrodynamische Kräfte nutzen, um das Fahrzeug schweben zu lassen und entlang einer Schiene zu führen, während die auf der Schiene montierten Linearmotoren die Antriebskraft erzeugen.

Bei Luftlagern wird mit Hilfe von Druckluft ein Gaspolster zwischen zwei Oberflächen erzeugt, das die Reibung verringert und eine reibungslose Bewegung mit minimalem Verschleiß ermöglicht. Diese Art von Aktuatoren wird häufig in Hochgeschwindigkeitsanwendungen eingesetzt, bei denen Präzision und geringer Luftwiderstand entscheidend sind, z. B. in der Halbleiterfertigung oder in der Luft- und Raumfahrt. Sie erfordern jedoch unter Umständen spezielle Luftsysteme und Wartung, um eine optimale Leistung zu gewährleisten, was die Gesamtkosten der Testvorrichtung 1 erhöhen kann. Außerdem kann dieses System anfällig für aerodynamische Turbulenzen sein, was die Stabilität und Zuverlässigkeit der Betätigung beeinträchtigt.

Der Quantenschwebebahn-Antrieb, der auch als Quantenverriegelung bekannt ist, beruht auf den Grundsätzen der Quantenmechanik, um einen Schwebeeffekt zu erzeugen. Der Schwebeeffekt wird durch den Meissner-Effekt verursacht, bei dem ein Supraleiter ein Magnetfeld aufgrund des Quantentunnelns von Elektronen abstößt. Das Konzept des Quantenschwebens erlaubt ein Antrieb mit hoher Präzision und geringer Reibung.

Sensoren werden zur Überwachung verschiedener Parameter wie Position, Geschwindigkeit, Beschleunigung und anderer relevanter Variablen eingesetzt, die einen sicheren und effizienten Transport gewährleisten. Im Folgenden werden einige der heute auf dem Markt erhältlichen Sensortechnologien vorgestellt, die sich für den Einsatz in der Testvorrichtung 1 eignen:
- Inertiale Messeinheiten,
- Piezoelektrische Sensoren (Beschleunigungsmesser),
- Optische Drehgeber,
- magnetische Sensoren (induktiv, Hall-Effekt),
- Kapazitive Sensoren,
- Interferometrische Sensoren,
- Laserverfolgungssysteme.

Alle diese Sensoren können im Fahrzeug, in der Schiene oder in beiden montiert werden.

Darüber hinaus ist zu erwähnen, dass viele der Treibersysteme für die genannten Aktuatoren Sensoren als Teil ihrer Standardausrüstung enthalten können, z. B. Back-EMF-Sensoren (elektromotorische Kraft) als Teil von elektromagnetischen/elektrodynamischen Treibern oder Druckmessgeräte für hydraulische und pneumatische Systeme.

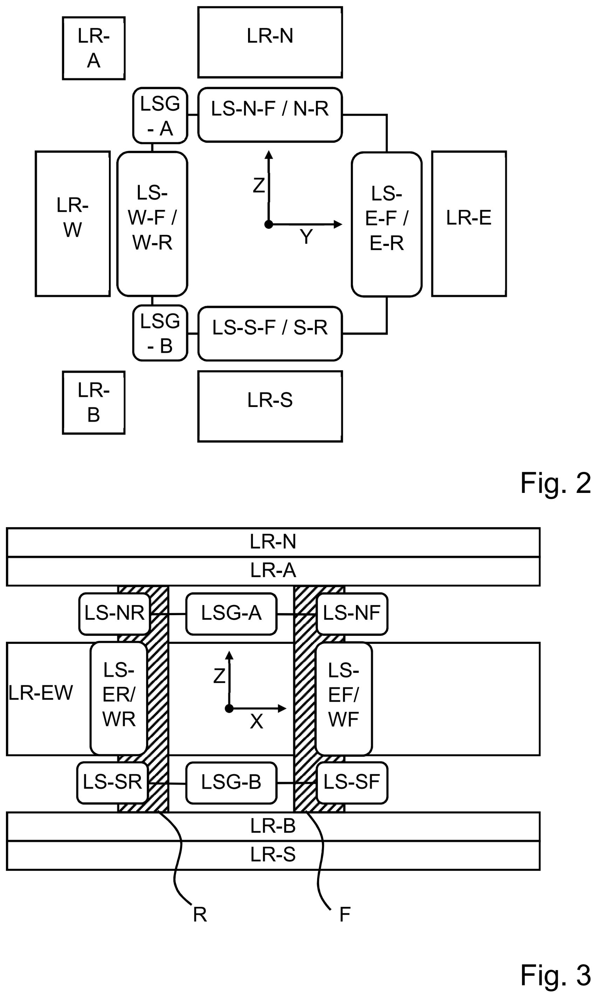

Figur 2 zeigt eine Skizze der Seitenansicht der Testvorrichtung 1 von der rechten Seite für eine Ein-Achs-Steuerung in der Ebene der Z-Y-Achse.

Dieses Variante verwendet ein einachsiges Steuerungssystem, um den Schlitten in eine Längsbewegungsrichtung zu bewegen, hier z.B. die X-Achse. Für dieses Ausführungsbeispiel wird ein Linear-Induktionsmotor LIM verwendet. Der LIM hat den Vorteil, dass er in der Lage ist, eine gepaarte Kombination aus Schub- und Schwebekraft zu erzeugen, je nach der verwendeten Antriebsfrequenz. Dadurch kann über einen großen Geschwindigkeitsbereich eine annähernd konstante Antriebskraft aufrechterhalten werden, was ideal für Anwendungen ist, bei denen der Schlitten mit hohen Geschwindigkeiten betrieben werden muss. Es ist zu beachten, dass "hohe Geschwindigkeiten" bei Hochfrequenzbetrieb erreicht werden.

Es gibt keine physikalischen Beschränkungen für die Erzeugung von zwei verschiedenen Kraftmustern für eine einzige Bewegungsachse. Dies würde jedoch zusätzliche Hardware- und Softwareentwicklung für die Steuerbarkeit erfordern. Die Schaffung solcher Muster ermöglicht die Kombination von niederfrequenten Schubmustern (Bewegungsamplitude von bis zu 12 Metern auf der Schiene) mit einem hochfrequenten Schubmuster (hochfrequente Mikrovibrationen von mehreren 100 Hz bis zu mehreren kHz).

Die Steuerung der anderen Achsen Y und Z ist nur für die Schweberichtung möglich. Für die Steuerung der anderen Achsen (Y und Z) gibt es mehrere Möglichkeiten, z.B. die Verwendung eines separaten LIM für jede Achse oder die Verwendung eines externen Systems zur Steuerung der Achsen. Die letztere Option ermöglicht eine größere Flexibilität und Skalierbarkeit.

Ein System, bei dem vier LIM-Schienen zur Steuerung der X-, Y- und Z-Achse verwendet werden, ist machbar. Die Schienen können so angeordnet werden, dass eine unabhängige Steuerung jeder Achse möglich ist, während das Fahrzeug weiterhin entlang der Hauptachse (X) bewegt werden kann. Die Kombination von zwei LIM-Schienen mit zwei LIM-Schnittstellen am Schlitten kann zu einer hohen Steuerbarkeit in fünf Freiheitsgraden führen, die sich aus der Steuerung der "vorderen" und einer "hinteren" Schnittstelle ergibt. Die Steuerbarkeit der X-Achsendrehung kann durch die Einbeziehung zusätzlicher Führungsschienen erreicht werden. Dies liegt daran, dass jede LIM-Schnittstelle unabhängig gesteuert werden kann, was eine präzise Steuerung der Position und Ausrichtung des Fahrzeugs im Raum ermöglicht.

Es ist in der Figur 2 erkennbar, dass sich vier Schienen LR-N, LR-S, LR-W und LR-E parallel zueinander in die Längsbewegungsrichtung X erstrecken und voneinander beabstandet in der Z-Y-Ebene in Nord N, Süd S, West W und Ost-Richtung positioniert sind. An den Schienen ist jeweils ein Schlitten LS-N-F/N-R, LS-S-F/S-R, LS-W-F/W-R, LS-E-F/E-R angeordnet, wobei ein Schlitten an einer vorderseitigen Schnittstelle F und ein Schlitten an der rückseitigen Schnittstelle R vorgesehen ist (z.B. LS-N-F = Schlitten LS an der Nord-Schiene N mit Ausrichtung zur Vorderseite F).

Es ist jeweils eine Schlittenführung LSG-A und LSG-B zwischen einer Schiene LR-A und einer Schiene LR-B vorhanden.

Figur 3 zeigt die Testvorrichtung 1 in der Schnittdarstellung um die Z-Achse von der Seitenansicht aus Figur 2 in der Ebene der Z-X-Achse. Die X-Achse entspricht der Transportrichtung bzw. Längsbewegungsrichtung LB.

Es ist erkennbar, dass neben der Nord-Schiene LR-N eine weitere Schiene LR-A und neben der Süd-Schiene LR-S eine weitere Schiene LR-B angeordnet ist.

Es sind jeweils an der rückseitigen Schnittstelle R und an der vorderseitigen Schnittstelle F vier Schlitten LS-N, LS-S, LS-W und LS-O vorhanden. Die Schlitten LS-N-R und LS-N-F sowie LS-S-R und LS-S-F sind jeweils über eine Schlittenführung LSG-A und LSG-B miteinander gekoppelt.

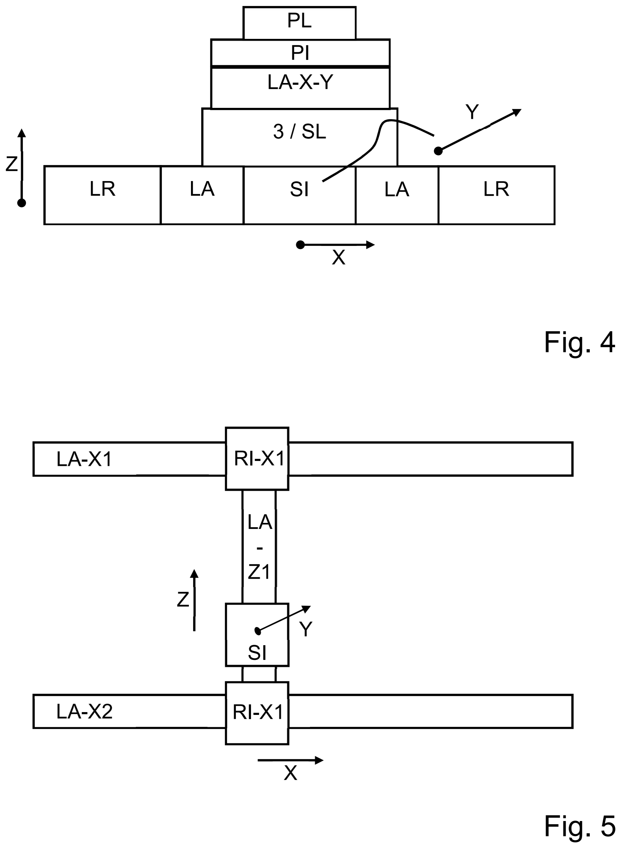

Figur 4 zeigt eine Funktionsskizze einer mehrachsigen Testvorrichtung 1 zur Steuerung mehrerer Achsen.

Eine der Achsen steuert das Mikrovibrationsmuster über den gesamten Frequenz- und Beschleunigungsbereich (X-Achse), während die beiden anderen Achsen (Y- und Z-Achse) eine begrenzte Dynamik über einen kleineren Frequenz- oder Amplitudenbereich ermöglichen, da diese beiden Parameter umgekehrt proportional zueinander sind, wenn der Bewegungshub begrenzt ist. Dies ist besonders problematisch bei niedrigen Frequenzen und hohen Beschleunigungsamplituden.

Diese Variante kann durch die Verwendung getrennter LIM-Schnittstellen für die X-Achse und die Y/Z-Achse erreicht werden. Die X-Achse hat eine höhere Bandbreite und ist in einer ersten Stufe mit dem Fundament der Einrichtung verbunden, während die Y/Z-Achsen in einer zweiten Stufe an den Schlitten angeschlossen sind. Für die Y/Z-Achsen könnten auch andere Technologien wie elektromechanische oder hydraulische Aktuatoren verwendet werden, um den geforderten Dynamikbereich zu erreichen. Diese Konfiguration würde eine präzisere Steuerung des Mikrovibrationsmusters ermöglichen, während sie gleichzeitig in der Lage wäre, begrenzte dynamische Bewegungen in Y- und Z-Richtung durchzuführen.

Es ist erkennbar, dass eine sich in Längsbewegungsrichtung X erstreckende Schiene LR vorhanden ist, an der ein Aktuator LA und eine Schlittenschnittstelle SI zu einem Schlitten SL angeordnet ist. Der Schlitten ist mit Linearaktuatoren LA-X-Y zur Bewegung in X- und Y-Richtung verbunden, auf denen ein Bauteilträger mit einer Plattform-Schnittstelle Pl angeordnet ist. Die zu testende Nutzlast PL ist auf oder in dem Bauteilträger angeordnet.

Figur 5 zeigt eine Skizze einer anderen mehrachsigen Testvorrichtung 1 in der Draufsicht.

Mehrere Achsen werden gleichzeitig über den gesamten Bewegungsbereich gesteuert, wobei es sich um eine Kombination aus zwei Achsen (X, Y) oder drei Achsen (X, Y, Z) handelt. In diesem Fall ist es möglich, komplexe Bahnen und Muster zu erzeugen, die mit der Steuerung nur einer Achse nicht möglich sind. Dieses Beispiel kann ein komplexes dynamisches System erfordern, das in der Lage ist, mehrere Eingaben gleichzeitig über eine große Amplitude zu erzeugen. Die Implementierung eines solchen Systems kann mit großen Roboterarmen oder, wie dargestellt, mit kartesischen kinematischen Systemen (die mehrere LIM-Systeme wie bei der Einzelachsensteuerung kombinieren) möglich sein. Diese Systeme werden in der Regel in der industriellen Automatisierung eingesetzt und können komplexe Aufgaben mit mehreren Freiheitsgraden bewältigen. Der größte Nachteil dieser komplexen Systeme in Bezug auf die Testvorrichtung 1 ist, dass das Gesamtschwingungsgeräusch und die dynamische Reaktion im Vergleich zu einer Einzelachsensteuerung weniger vorhersehbar sind, da es schwieriger wird, den Beitrag jeder einzelnen Achse zum Gesamtsystemverhalten zu isolieren und anzupassen.

Die dargestellte Ausführungsform einer kombinierten Achsensteuerung kombiniert die Merkmale der Einzel- und der Mehrachsensteuerung. Es umfasst die gleichzeitige Steuerung von mehr als einer Achse und ermöglicht komplexe Bewegungen und Interaktionen zwischen verschiedenen Achsen. Diese Art der Steuerung ist besonders nützlich in Szenarien, in denen eine präzise Koordination zwischen mehreren Aktoren erforderlich ist. So wird beispielsweise ein mechanischer Antrieb mit geringer Präzision für die primäre Bewegung verwendet. Ein hochpräziser elektrischer Antrieb wird für die Sekundärbewegung verwendet. Die Kombination beider Antriebsarten bietet ein ausgewogenes Verhältnis zwischen Kosten und Leistung und eignet sich daher für Anwendungen, bei denen eine hohe Genauigkeit erforderlich ist, das Budget jedoch begrenzt ist.

Der dritte beteiligte Mechanismus kann eine sekundäre hochpräzise elektrische Betätigung sein, um Geräusche und Abweichungen in der Y- und Z-Achse aufgrund mechanischer Toleranzen oder externer Faktoren wie Temperaturschwankungen, Aerodynamik und seismische Störungen zu kompensieren. Je nach Ausführung kann eine zusätzliche Steuerbarkeit aller drei Achsen (X, Y, Z) erreicht werden, z. B. durch die Verwendung einer Stewart-Plattform-Konfiguration oder anderer fortschrittlicher Mechanismen, die mehr Freiheitsgrade für die Steuerung des Mikrovibrationsmusters bieten können.

Es ist aus der beispielhaft in Figur 5 skizzierten Variante erkennbar, dass zwei Linearaktuatoren LA-X1 und LA-X2 auf zwei parallel zueinander in X-Richtung ausgerichtet sind. Eine Schlittenschnittstelle RI-X1 und RI-X2 ist jeweils mit einem Schlitten in Längsbewegungsrichtung X verschiebbar gelagert. Die beiden Schlittenschnittstellen RI-X1 und RI-X2 sind über einen sich in Z-Richtung, d.h. quer zur X-Richtung erstreckenden Linearaktuator LA-Z1 verbunden. Auf dem Linearaktuator ist ein Schlitten SI in Z-Richtung bewegbar gelagert. Der Schlitten SI ist zudem mit Hilfe der parallelen Linearaktuatoren LA-X1 und LA-X2 in X-Richtung bewegbar. Die Y-Richtung ist orthogonal zur X- und Y-Richtung und weist in der Darstellung Blickrichtung nach oben.

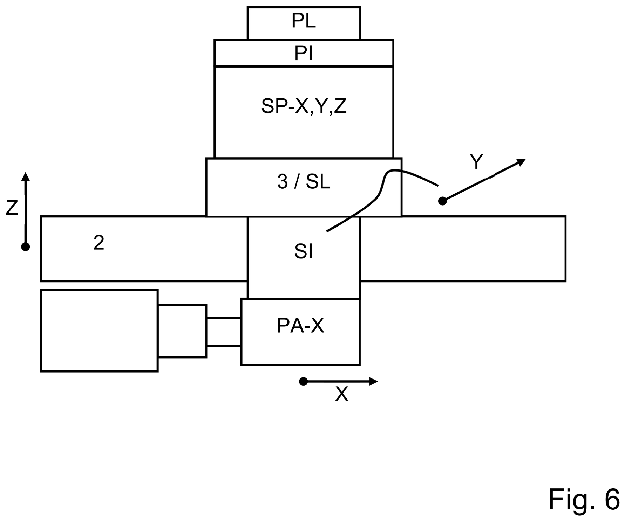

Figur 6 zeigt eine Funktionsskizze einer Testvorrichtung 1 mit Kolbenaktuator und kombiniertem Antrieb der Nutzlast in Längsbewegungsrichtung X und mit einer Steward-Plattform in die X-, Y-, und Z-Achse.

Auf einer sich in X-Richtung erstreckenden Schiene 2 ist ein Schlitten SI mit einer Schlittenschnittstelle SI bewegbar gelagert. Der Antrieb des Schlittens SI erfolgt beispielsweise mit einem Kolbenaktuator PA-X, dessen Kolben sich parallel zur Schiene 2 in X-Richtung erstreckt und in diese Längsbewegungsrichtung bewegbar ist.

Der Schlitten SL trägt eine Steward-Plattform, der an seinem beweglichen Ende eine Nutzlastschnittstelle PL mit einer Nutzlast PL in die X-, Y-, und Z-Achsen bewegen kann. Die Steward-Plattform erlaubt eine Bewegung in allen Freiheitsgraden mit größtmöglicher Steifigkeit des Aktuators.

## Patentansprüche

1. Testvorrichtung (1) zum Testen von Vibrationseinwirkungen auf bewegte Bauteile (5), wobei die Testvorrichtung (1) eine Linearantriebseinheit mit einer sich in eine Längsbewegungsrichtung (X) erstreckenden Schiene (2) und einem linear beweglich auf der Schiene (2) gelagerten Schlitten (3) und eine zur Ansteuerung der Testvorrichtung (1) ausgebildete Steuerungseinheit (9) hat, **dadurch gekennzeichnet, dass** die Linearantriebseinheit einen elektromagnetischen oder elektrodynamischen Antriebsaktuator hat und zur Bewegung des Schlittens (3) auf der Schiene (2) ausgebildet ist, wobei der Linearantrieb zur überlagerten niederfrequenten und hochfrequenten Beschleunigung und Entschleunigung des Schlittens eingerichtet ist.

2. Testvorrichtung (1) nach Anspruch 1, **dadurch gekennzeichnet, dass** eine Bewegungseinheit an dem Schlitten (3) angeordnet ist, wobei die Bewegungseinheit einen Bauteilträger (4) zum Tragen des zu bewegenden Bauteils (5) hat und zur hochfrequenten Bewegung des Bauteilträgers (4) in eine Richtung (Y, Z) quer zur Längsbewegungsrichtung (X) des Schlittens (3) auf der Schiene (2) eingerichtet ist.

3. Testvorrichtung (1) nach Anspruch 2, **dadurch gekennzeichnet, dass** die Steuerungseinheit (9) zur Kompensation gemessener Störungen durch Ansteuerung der Bewegungseinheit zur hochfrequenten Bewegung des Bauteilträgers (4) eingerichtet ist.

4. Testvorrichtung (1) nach einem der vorhergehenden Ansprüche, **dadurch gekennzeichnet, dass** die Schiene (2) eine Länge (L) hat, die um mindestens das 10¹¹-fache größer als die Schrittweite der inkremental regelbaren hochfrequenten Bewegungsschritte des Bauteilträgers in eine Längs- und/oder Querbewegungsrichtung (X, Y, Z) durch die Linearantriebseinheit und/oder der Bewegungseinheit ist.

5. Testvorrichtung (1) nach Anspruch 4, **dadurch gekennzeichnet, dass** die Länge (L) der Schiene (2) um das 10⁷-fache größer als die Schrittweite der inkremental regelbaren hochfrequenten Bewegungsschritte in Längsbewegungsrichtung (X) ist und die Länge (L) um das 10¹¹-fache größer als die Schrittweite der inkremental regelbaren hochfrequenten Bewegungsschritte in Querbewegungsrichtung (Y, Z) ist.

6. Testvorrichtung (1) nach einem der vorhergehenden Ansprüche, **dadurch gekennzeichnet, dass** die Testvorrichtung (1) eine Messeinheit hat, die zur Messung der Bewegung des Bauteilträgers (4) ausgebildet ist.

7. Testvorrichtung (1) nach Anspruch 6, **dadurch gekennzeichnet, dass** die Messeinheit mit der Steuerungseinheit (9) verbunden ist und die Steuerungseinheit (9) zur Regelung der Beschleunigung des Bauteilträgers (4) eingerichtet ist.

8. Testvorrichtung (1) nach Anspruch 6 oder 7, **dadurch gekennzeichnet, dass** die Messeinheit zur Erfassung der Lage, Position, Geschwindigkeit und/oder Beschleunigung des Bauteilträgers (4) ausgebildete Messsensoren (7, 8) hat.

9. Testvorrichtung (1) nach einem der vorhergehenden Ansprüche, **dadurch gekennzeichnet, dass** die Schiene (2) der Linearantriebseinheit ein Führungsprofil hat, das zum Halten des Schlittens (3) in den von der Längsbewegungsrichtung (X) des Schlittens (3) abweichenden Richtungen an der Schiene (2) und zum Führen des Schlittens (2) in Längsbewegungsrichtung (X) des Schlittens (2) ausgebildet ist.

10. Testvorrichtung (1) nach einem der vorhergehenden Ansprüche, **dadurch gekennzeichnet, dass** der Bauteilträger (4) eine Energieversorgung zur Versorgung des an dem Bauteilträger (4) getragenen Bauteils (5) und eine Kommunikationsschnittstelle zur Übertragung von Daten hat.

11. Testvorrichtung (1) nach einem der vorhergehenden Ansprüche, **dadurch gekennzeichnet, dass** der Schlitten (3) in Längsbewegungsrichtung (X) durch die überlagerte hochfrequente Beschleunigung mit Hin- und Her-Bewegungsschritten von bis zu 10⁻⁶ m und niederfrequente Bewegung mit Hin- und Her-Bewegungsschritten von mindestens 10⁻³ m ansteuerbar ist.

12. Testvorrichtung (1) nach einem der vorhergehenden Ansprüche, **dadurch gekennzeichnet, dass** der Bauteilträger (4) relativ zum Schlitten (3) in Querrichtung (Y, Z) zur Längsbewegungsrichtung (X) durch hochfrequente Beschleunigung mit Hin- und Her-Bewegungsschritten im Bereich von 10⁻¹⁰ m bis 10⁻⁶ m bewegbar ist.

13. Verfahren zum Testen von Bauteilen (5) mit einer Testvorrichtung (1) nach einem der vorhergehenden Ansprüche, **gekennzeichnet durch**:
berührungsloses Bewegen des Schlittens (3) auf der Schiene (2) mit dem elektromagnetischen oder elektrodynamischen Antriebsaktuator in eine Längsbewegungsrichtung (X) entlang der Längserstreckungsrichtung (X) der Schiene (2) mit der den Antriebsaktuator aufweisenden Linearantriebseinheit mit einer überlagerten niederfrequenten und hochfrequenten Beschleunigung und Entschleunigung des Schlittens.

14. Verfahren nach Anspruch 13, **dadurch gekennzeichnet, dass** der Bauteilträger (4), welcher das zu bewegende Bauteil (5) trägt, relativ zum Schlitten (3) durch eine Be- und Entschleunigung mit Hin- und Herbewegungsschritten von bis zu 10⁻⁶ m und die niederfrequente Bewegung mit Hin- und Herbewegungsschritten von mindestens 10⁻³ m bewegt wird.

15. Verfahren nach Anspruch 13 oder 14, **dadurch gekennzeichnet, dass** der Bauteilträger, welcher das zubewegende Bauteil (5) trägt, relativ zum Schlitten (3) in Querrichtung (Y, Z) zur Längsbewegungsrichtung (X) durch eine hochfrequente Be- und Entschleunigung mit Hin- und Herbewegungsschritten im Bereich von 10⁻¹⁰ m bis 10⁻⁶ m bewegt wird.

16. Verfahren nach einem der Ansprüche 13 bis 15, **gekennzeichnet durch**:
- Detektion von auf die Bewegung des Bauteilträgers (4) wirkenden Störungen; und
- hochfrequentes Beschleunigen des Bauteilträgers (4) relativ zum Schlitten (3) in Querbewegungsrichtung (Y, Z) quer zur Längsbewegungsrichtung (X) des Schlittens (3) mit der Bewegungseinheit so, dass die detektierten Störungen reduziert werden.
